(19) Europäisches Patentamt European Patent Office Office européen des brevets

(11) **EP 4 234 920 B1**

(12) **EUROPÄISCHE PATENTSCHRIFT**

(45) Veröffentlichungstag und Bekanntmachung des Hinweises auf die Patenterteilung:
**01.01.2025   Patentblatt 2025/01**

(21) Anmeldenummer: **22158337.0**

(22) Anmeldetag: **23.02.2022**

(51) Internationale Patentklassifikation (IPC):
***F03D 7/02*** (2006.01)

(52) Gemeinsame Patentklassifikation (CPC):
**F03D 7/0224; F03D 7/024;** F05B 2270/1095;
F05B 2270/309; F05B 2270/328; F05B 2270/331;
Y02E 10/72

(54) **EINZELBLATTVERSTELLUNG BEI EINER WINDENERGIEANLAGE**

ADJUSTMENT OF INDIVIDUAL BLADES OF A WIND ENERGY TURBINE

RÉGLAGE INDIVIDUEL DES PALES DANS UNE ÉOLIENNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**30.08.2023   Patentblatt 2023/35**

(73) Patentinhaber: **Wobben Properties GmbH
26607 Aurich (DE)**

(72) Erfinder: **von Aswege, Enno
26629 Großefehn (DE)**

(74) Vertreter: **Eisenführ Speiser
Patentanwälte Rechtsanwälte PartGmbB
Postfach 10 60 78
28060 Bremen (DE)**

(56) Entgegenhaltungen:
**WO-A1-2015/192852      WO-A1-2020/104664
US-A1- 2011 229 300**

**Beschreibung**

Die vorliegende Erfindung betrifft ein Verfahren zum Steuern einer Windenergieanlage und die Erfindung betrifft auch eine entsprechende Windenergieanlage. Insbesondere betrifft die Erfindung das Durchführen einer individuellen Blattverstellung von Rotorblättern eines Rotors der Windenergieanlage, die auch als Einzelblattverstellung bezeichnet werden kann.

Windenergieanlagen sind bekannt, sie wandeln kinetische Energie aus Wind mittels eines Rotors mit mehreren Rotorblättern in mechanische Arbeit und weiter mittels eines Generators in elektrische Energie um. Jedenfalls betrifft die vorliegende Erfindung Windenergieanlagen die nach diesem Prinzip arbeiten.

Moderne Windenergieanlagen weisen dabei heutzutage einen Rotordurchmesser von über 100 Metern auf. Die Rotorblätter überstreichen somit eine Kreisfläche mit einem solchen großen Durchmesser. Üblicherweise sind drei Rotorblätter vorgesehen, die in dem Rotor entsprechend gleichmäßig um 120° zueinander versetzt angeordnet sind und damit jeweils zu einem Zeitpunkt in unterschiedlichen Bereichen der Rotorfläche sind. Dadurch können die Rotorblätter zum selben Zeitpunkt unterschiedlichen Windbedingungen ausgesetzt sein. Besonders können die Windgeschwindigkeit und auch die Windrichtung unterschiedlich sein.

Insbesondere können sich diese unterschiedlichen Windbedingungen als unterschiedliche Blattlasten bemerkbar machen. Um diese zu berücksichtigen, kann eine Einzelblattverstellung vorgesehen sein, die den Blattwinkel des jeweiligen Rotorblattes an die konkrete Belastung des Blattes anpasst.

Häufig treten solche Belastungen umlaufzyklisch auf sodass eine umlaufzyklische Blattverstellung sinnvoll sein kann. Vereinfachend und veranschaulichend ausgedrückt kann die Blattbelastung in einem oberen Bereich der Rotorfläche größer sein, als in einem unteren Bereich und entsprechend kann vorgesehen sein, das Rotorblatt im oberen Bereich der Rotorfläche etwas aus dem Wind zu drehen, und es zum unteren Bereich der Rotorfläche etwas in den Wind zu drehen. Es kann dafür eine sinusförmige Funktion vorgesehen sein.

Zur Steuerung der Windenergieanlage insgesamt ist außerdem ein geeigneter Arbeitspunkt einzustellen, der einen kollektiven Blattwinkel beinhaltet. Ein solcher kollektiver Blattwinkel kann synonym auch als kollektiver Pitchwinkel bezeichnet werden. Überhaupt kann ein Blattwinkel synonym auch als Pitchwinkel bezeichnet werden.

Ein solcher kollektiver Blattwinkel ist für alle Rotorblätter gleich und ihm wird dann für jedes Rotorblatt individuell ein individueller Offsetwinkel überlagert bzw. aufgeschaltet.

In einem Fall kann das bedeuten, dass dem kollektiven Blattwinkel ein individueller sinusförmiger Offsetwinkel überlagert wird. Ein solcher sinusförmiger Offsetwinkel könnte grundsätzlich auch für alle Rotorblätter nach Amplitude und Frequenz gleich sein, aber phasenverschoben sein. Er könnte auch unterschiedliche Amplituden zwischen den einzelnen Rotorblättern aufweisen, wohingegen die Frequenz bei allen Rotorblättern gleich sein sollte.

Bei einer konkreten Umsetzung kann es vorkommen, dass der tatsächliche Blattwinkel nicht genau dem vorgegebenen und/oder angenommenen Blattwinkel entspricht. Solche Abweichungen sind üblicherweise individuell, müssen also für jedes Blatt einzeln beachtet werden. Um eine solche Abweichung zu berücksichtigen, kann ein Regler vorgesehen sein, der eine Abweichung zwischen erfasstem Blattwinkel und vorgesehenen Blattwinkel ausregelt. Um einer quasi stationären Genauigkeit nahezukommen, kann dabei ein Integralverhalten vorgesehen sein.

Es ist dabei zu berücksichtigen, dass moderne Windenergieanlagen so große Rotorblätter haben, dass deren Dynamik beim Verstellen ihres Rotorblattes zu berücksichtigen ist. Mit anderen Worten werden bei der Blattverstellung diese Rotorblätter um ihre eigene Längsachse gedreht und diese Drehung kann weder beliebig schnell noch beliebig ruckartig erfolgen, denn solche Rotorblätter haben zusätzlich zu ihrer enormen Länge auch eine erhebliche Tiefe von einigen Metern, zumindest im Bereich in der Nähe der Rotornabe. Daher ist es häufig vorteilhaft, bereits durch die übergeordnete Steuerung statt absoluter Werte Blattwinkelverstellraten für das Verstellen der Blattwinkel vorzugeben.

Bei der beschriebenen Einzelblattverstellung bedeutet das, dass zusätzlich zu einer Verstellrate zum Einstellen des kollektiven Blattwinkels eine Verstellrate zum Berücksichtigen des individuellen Offsetblattwinkels vorzusehen ist.

Insgesamt kann somit ein komplexes System vorliegen, in dem ein kollektiver Blattwinkel vorgegeben und berücksichtigt werden muss, für jedes Rotorblatt ein individueller Blattwinkel vorgegeben und berücksichtigt vorgegeben werden muss, diverse Eigenschaften des Rotors, Rotorblatts und Verstelleinrichtung berücksichtigt werden müssen, insbesondere eine Dynamik oder zumindest ein Trägheitsmoment des jeweiligen Rotorblattes, und zudem Winkelabweichungen möglichst gut berücksichtigt werden sollen. Ein Beispiel aus dem Stand der Technik ist in US2011/229300A1 offenbart.

Der vorliegenden Erfindung liegt somit die Aufgabe zugrunde, zumindest eines der genannten Probleme zu adressieren. Insbesondere soll eine Lösung vorgeschlagen werden, bei der eine Einzelblattverstellung hinsichtlich der Dynamik, Genauigkeit und/oder Zuverlässigkeit verbessert werden soll, oder zumindest eine gute Lösung vorgeschlagen werden soll. Zumindest soll zu bisher bekannten Lösungen eine alternative vorgeschlagen werden. Erfindungsgemäß wird ein Verfahren nach Anspruch 1 vorgeschlagen. Das Verfahren betrifft somit das Steuern einer Windenergieanlage. Als Windenergieanlage wird eine zugrunde gelegt, die einen Rotor mit mehreren Rotorblättern aufweist, insbesondere mit drei Rotorblättern. Die Rotorblätter sind in ihrem Blattwinkel verstellbar und jedes Rotorblatt ist individuell ansteuerbar und damit auch individuell verstellbar, nämlich in seinem Blattwinkel. Zum individuellen Ansteuern wird jeweils eine gesamte Verstellrate vorgegeben, die eine vorgesehene Änderungsgeschwindigkeit des jeweiligen Blattwinkels angibt. Die Verstellrate beschreibt also eine Blattwinkelveränderung pro Zeit.

Weiterhin ist ein für alle Rotorblätter gleicher kollektiver Blattwinkel vorgesehen. Ein solcher kollektiver Blattwinkel kann synonym auch als kollektiver Pitchwinkel oder als gemeinsamer Blattwinkel bezeichnet werden. Der kollektive Blattwinkel ist somit ein Blattwinkel, der individuelle Unterschiede zwischen den einzelnen Rotorblättern grundsätzlich nicht berücksichtigt. Er bestimmt besonders den aktuellen Arbeitspunkt. Der kollektive Blattwinkel kann beispielsweise im Teillastbereich, wenn die Windgeschwindigkeit noch unterhalb von einer Nennwindgeschwindigkeit liegt, einen festen Wert aufweisen. Der kollektive Blattwinkel kann aber auch im Teillastbereich veränderlich sein, wenn das entsprechende Regelungskonzept das vorsieht. Insbesondere ist der kollektive Blattwinkel außerhalb des Teillastbereichs, also insbesondere in einem Volllastbereich oder in einem Übergangsbereich von Teillastbereich zu Volllastbereich, veränderlich. Ist der kollektive Blattwinkel veränderlich, ist daher auch diese Veränderlichkeit für alle Rotorblätter gleich. Die Art der Berücksichtigung wird unten noch beschrieben.

Außerdem ist eine für alle Rotorblätter gleiche kollektive Verstellrate vorgesehen, die eine vorgesehene Änderungsgeschwindigkeit des kollektiven Blattwinkels beschreibt. Entsprechend kann auch die kollektive Verstellrate als gemeinsame Verstellrate synonym bezeichnet werden. Die kollektive Verstellrate ist somit eng mit dem kollektiven Blattwinkel verknüpft. Ihre Berücksichtigung kann unmittelbar oder über den kollektiven Blattwinkel erfolgen. Ebenfalls kann die Berücksichtigung des kollektiven Blattwinkels unmittelbar oder über die Berücksichtigung der kollektiven Verstellrate erfolgen.

Weiterhin wird für jedes Rotorblatt ein individueller Offsetwinkel vorgegeben, der einen Wert angibt, um den der Blattwinkel von dem kollektiven Blattwinkel abweichen soll. Über den kollektiven Blattwinkel bzw. die kollektive Verstellrate wird somit für alle Rotorblätter ein gleicher Wert vorgesehen. Individuelle Unterschiede können für jedes Rotorblatt über den jeweiligen individuellen Offsetwinkel berücksichtigt werden.

Beispielsweise kann jeder individuelle Offsetwinkel ständig neu berechnet werden und/oder durch eine zyklische Funktion, insbesondere umlaufzyklische Funktionen mit gleicher Frequenz vorgegeben werden. Die Frequenz kann einer Umlauffrequenz des Rotors entsprechen. Beispielsweise kann für jedes Rotorblatt ein individueller Offsetwinkel durch eine Sinusfunktion vorgegeben werden. Es kommen aber auch andere Funktionen in Betracht, wie beispielsweise eine dreiecksförmige Funktion. Die Sinusfunktion ist allerdings bevorzugt.

Weiterhin ist vorgesehen, dass für jedes Rotorblatt aus dem individuellen Offsetwinkel eine individuelle Vorsteuerverstellrate bestimmt wird, die eine Verstellrate angibt, die zum Erreichen des Offsetwinkels vorgesehen ist. Insoweit ist vorgesehen, unmittelbar aus dem individuellen Offsetwinkel die Vorsteuerverstellrate zu bestimmen. Insoweit liegt eine Umsetzung wie bei einer Steuerung vor, weil der Offsetwinkel unmittelbar in die Vorsteuerverstellrate übertragen wird. Es erfolgt also kein Soll-Istwert Vergleich zwischen vorgegebenen individuellen Offsetwinkel und tatsächlichen oder erfasstem Offsetwinkel.

Dennoch wird außerdem vorgesehen, dass für jedes Rotorblatt in Abhängigkeit von einem Vergleich des individuellen Offsetwinkels und einem erfassten, insbesondere gemessenen, Blattwinkel des Rotorblattes eine individuelle Offsetabweichung bestimmt wird. Hier ist insbesondere vorgesehen, dass aus dem Vergleich des individuellen Offsetwinkels und dem erfassten Blattwinkel des Rotorblattes, bereinigt um den kollektiven Blattwinkel, eine individuelle Offsetabweichung bestimmt wird. Der Vergleich ist insbesondere einer Differenz zwischen den beiden Größen. Das Bereinigen bedeutet insbesondere, dass vor dem Vergleich von dem erfassten Blattwinkel der kollektive Blattwinkel abgezogen wird, oder zu dem individuellen Offsetwinkel der kollektive Blattwinkel aufaddiert wird, oder dass nach dem Vergleich der kollektive Blattwinkel abgezogen wird. Hier soll die Offsetabweichung eine Abweichung zwischen vorgegebenem und am Rotorblatt eingestellten individuellen Offsetwinkel wiedergeben, um die Umsetzung zu überwachen. Am Rotorblatt wird aber nicht der Offsetwinkel, sondern die Summe aus kollektivem Blattwinkel und individuellem Offset aufgeschaltet, daher erfolgt für den Vergleich wieder die Bereinigung um den kollektiven Blattwinkel.

Insoweit ist außerdem eine Reglung vorgesehen, die diesen Soll-Istwert Vergleich zwischen vorgegebenen individuellen Offsetwinkel und erfassten Blattwinkel durchführt und verwendet, wie nachfolgend erläutert wird.

Für die gesamte Verstellrate jedes Rotorblattes ist vorgesehen, dass diese in Abhängigkeit von

- dem kollektiven Blattwinkel und/oder der kollektiven Verstellrate,

- der individuellen Vorsteuerverstellrate und

- der individuellen Offsetabweichung

bestimmt wird. Die gesamte Verstellrate wird also in Abhängigkeit von drei Größen bestimmt. Über den kollektiven Blattwinkel wird der vorgesehene Arbeitspunkt der Windenergieanlage berücksichtigt. Hier kann der kollektive Blattwinkel, oder stattdessen die kollektive Verstellrate berücksichtigt werden, oder beide Größen zusammen. Der kollektive Blattwinkel und die kollektive Verstellrate sind eng verknüpft und es kann je nach Reglungskonzept eine dieser beiden Größen unmittelbar verwendet werden, woraus auch jeweils ein Zusammenhang zur anderen Größe hergestellt wird. Es kommt auch in Betracht, dass beide Größen unmittelbar berücksichtigt werden.

Aus der individuellen Vorsteuerverstellrate und der individuellen Offsetabweichung kann eine individuelle Verstellrate bestimmt werden, die auf die kollektive Verstellrate aufgeschaltet werden kann, um dadurch die gesamte Verstellrate für das jeweilige Rotorblatt zu bilden. Die gesamte Verstellrate jedes Rotorblattes setzt sich somit aus der kollektiven Verstellrate und der individuellen Verstellrate zusammen. Insbesondere bildet die Summe der kollektiven Verstellrate und der individuellen Verstellrate die gesamte Verstellrate.

Der individuelle Offsetwinkel fließt in das Bestimmen der individuellen Verstellrate auf zwei Weisen ein, nämlich zum einen über die individuelle Vorsteuerverstellrate und zum anderen über die individuelle Offsetabweichung. Damit geht der individuelle Offsetwinkel sowohl über eine Steuerung, als auch über einer Reglung ein. Die Steuerung kann auch als Vorsteuerung bezeichnet werden und diese gibt somit die individuelle Vorsteuerverstellrate aus.

Durch eine solche Vorsteuerung kann die individuelle Verstellrate schnell und auch ohne dynamische Einflüsse, die sich andernfalls durch eine Regelungsrückführung ergeben könnten, den individuellen Offsetwinkel berücksichtigen, der dadurch sofort und unmittelbar die individuelle Verstellrate beeinflusst.

Über die Berücksichtigung der individuellen Offsetabweichung können dennoch Abweichungen ausgeregelt werden. Wegen der außerdem verwendeten Vorsteuerung sind solche Abweichungen allerdings gering, sodass auch vorzugsweise ein langsamer Regler in Betracht kommt, der eine stationäre Genauigkeit erreichen bzw. bei einem sich langsam ändernden Offsetwinkel eine quasi stationäre Genauigkeit zumindest verbessern kann.

Es ist auch zu beachten, dass bei der Reglung, die die individuelle Offsetabweichung berücksichtigt, ein Blattwinkel bzw. eine Blattwinkelabweichung, nämlich die individuelle Offsetabweichung, in eine Verstellrate umgesetzt werden.

Jeder individuelle Offsetwinkel kann so unmittelbar umgesetzt werden. Die Umsetzung ist schnell und gleichzeitig erreicht sie eine hohe Genauigkeit.

Gemäß einem Aspekt wird vorgeschlagen, dass die individuelle Vorsteuerverstellrate mittels einer Vorsteuerung aus dem individuellen Offsetwinkel bestimmt wird, und aus der individuellen Offset-Abweichung mittels eines Offsetreglers eine Reglerverstellrate bestimmt wird, um die individuelle Offset-Abweichung auszuregeln, wobei die gesamte Verstellrate aus der kollektiven Verstellrate, aus der Vorsteuerverstellrate und der Reglerverstellrate bestimmt wird, insbesondere aus ihrer Summe. Die individuelle Verstellrate wird dabei aus der Vorsteuerverstellrate und der Reglerverstellrate bestimmt. Der individuelle Offsetwinkel wird somit auf zwei Weisen berücksichtigt.

Zum einen wird aus dem individuellen Offsetwinkel eine individuelle Vorsteuerverstellrate bestimmt, nämlich insbesondere durch Ableitung des individuellen Offsetwinkels. Besonders liegt hier die Erkenntnis zu Grunde, dass der individuelle Offsetwinkel eine über die Zeit veränderliche Funktion ist, insbesondere eine zyklische Funktion. Häufig kommt eine Sinusfunktion in Betracht. Eine solche Zeitfunktion kann nach der Zeit abgeleitet werden und gegebenenfalls mit einem Verstärkungsfaktor modifiziert werden. Das Ergebnis ist die individuelle Vorsteuerverstellrate. Diese individuelle Vorsteuerverstellrate gibt somit eine vorgesehene Verstellgeschwindigkeit des Blattwinkels an. Wird der Rotorblattwinkel mit dieser Verstellgeschwindigkeit verstellt, ergibt sich als Rotorblattwinkel der individuelle Offsetwinkel, wenn der Rotorblattwinkel ansonsten null wäre. Wird also mit anderen Worten auf einen Rotorblattwinkel mit dem Wert null eine solche individuelle Vorsteuerverstellrate aufgeschaltet, ergibt sich im Idealfall der individuelle Offsetwinkel.

Im laufendem Betrieb kommt aber der kollektive Blattwinkel hinzu, und der kann als kollektive Verstellrate vorgesehen sein. Die kollektive Verstellrate und die individuelle Vorsteuerverstellrate können aufaddiert werden und es kann sich eine Verstellrate, also eine Änderungsgeschwindigkeit des Blattwinkels ergeben, mit der der Blattwinkel verstellt wird. Das Ergebnis ist bei idealer Umsetzung, dass der Rotorblattwinkel der Summe aus kollektiven Blattwinkel und individuellen Offsetwinkel entspricht.

Mit einem solchen Vorgehen, insbesondere der Verwendung der Vorsteuerung zum Bestimmen der individuellen Vorsteuerverstellrate, ergibt sich eine schnelle Umsetzung sowohl von kollektiven Blattwinkel als auch von dem individuellen Offsetwinkel. Dadurch, dass eine Vorsteuerung eine Steuerung ist, also keine Rückführung beinhaltet, können etwaige Regelschwingungen ausgeschlossen werden. Der individuelle Offsetwinkel kann unmittelbar vorgegeben werden und durch die individuelle Vorsteuerverstellrate umgesetzt werden.

Etwaige Abweichungen, insbesondere stationäre Ungenauigkeiten oder quasi stationäre Ungenauigkeiten können allerdings durch eine solche Vorsteuerung nicht berücksichtigt werden. Unter einer quasi stationären Ungenauigkeit wird insoweit eine Nachführgenauigkeit für ein zeitveränderliches Signal verstanden, insbesondere für ein Sinussignal, dass für den individuellen Offsetwinkel vorgegeben sein kann.

Um eine solche stationäre oder quasi stationäre Genauigkeit zu erreichen ist somit zusätzlich der Offsetregler vorgesehen, der aus der individuellen Offsetabweichung eine Reglerverstellrate bestimmt. Hierdurch können Abweichungen erkannt und ausgeregelt werden. Es ist aber zu beachten, dass ein solcher Offsetregler lediglich ergänzend zur Vorsteuerung vorgesehen ist. Dadurch kann die schnelle und direkte dynamische Umsetzung des individuellen Offsetwinkels in die genannte individuelle Vorsteuerverstellrate weiterhin gewährleistet werden, zusätzlich kann aber

trotzdem eine Ausregelung von - meist kleinen - Abweichungen erreicht werden. Entsprechend kann auch eine Reglerverstärkung des Offsetreglers so gewählt werden, dass der Offsetregler eine untergeordnete dynamische Rolle spielt. Insbesondere kann ein reglerbedingtes Schwingen oder sogar eine reglerbedingte Instabilität vermieden werden, während eine schnelle Umsetzung des individuellen Offsetwinkels trotzdem erreicht werden kann.

Vorzugsweise ist als Offsetregler ein P-Regler vorgesehen. Es ist zu beachten, dass auch dieser Offsetregler eine Verstellrate ausgibt, also eine Änderungsgeschwindigkeit des Winkels. Eine konstante Änderungsgeschwindigkeit führt zu einem stetigen Ansteigen des Blattwinkels. Das System weist damit ein integrales Verhalten auf. Damit weiß auch der Regelkreis insgesamt, also ein P-Regler mit System, ein integrales Verhalten auf. Es wurde daher erkannt, dass durch einen Offsetregler mit P-Verhalten ein integrales Verhalten erreicht werden kann, wenn der Regler eine Verstellrate ausgibt.

Vorzugsweis ist somit vorgesehen, dass der Offset-Regler einen P-Regler aufweist bzw. als P-Regler ausgebildet ist, der durch einen entsprechenden P-Faktor die Winkeldifferenz, also die individuelle Offsetabweichung, in eine Verstellrate umrechnet, nämlich die Reglerverstellrate.

Die individuelle Vorsteuerverstellrate und die Reglerverstellrate können aufaddiert werden und können dadurch zusammen den individuellen Offsetwinkel, also seine Umsetzung berücksichtigen bzw. erreichen.

Die individuelle Vorsteuerverstellrate kann dann zusammen mit der Reglerverstellrate auf die kollektive Verstellrate aufaddiert werden. Durch die Summe der drei Verstellraten kann dann der Offsetregler insgesamt geführt werden.

Dies kann für jedes Rotorblatt durchgeführt werden und dadurch ist eine schnelle, schwingungsfreie Umsetzung einer Einzelblattverstellung gut erreichbar, bei gleichzeitig hoher Regelgüte.

Gemäß einem Aspekt wird vorgeschlagen, dass die Vorsteuerverstellrate unabhängig von dem erfassten Blattwinkel bestimmt wird, insbesondere unabhängig von der individuellen Offsetabweichung. Diese Ausführungsform unterstreicht, dass zum Bestimmen der Vorsteuerverstellrate keine Signalrückführung von dem erfassten Blattwinkel einfließt. Genau das zeichnet eine Steuerung bzw. Vorsteuerung aus. Damit wird eine schnelle Umsetzbarkeit des individuellen Offsetwinkels in die Vorsteuerverstellrate erreicht und eine reglungsbedingte Schwingung ausgeschlossen.

Gemäß einem Aspekt wird vorgeschlagen, dass der individuelle Offsetwinkel als zeitlicher Offset-Verlauf, insbesondere durch eine zeitabhängige und/oder von einer Position oder Drehung des Rotors abhängige Offsetfunktion vorgegeben wird. Hier kommt somit insbesondere eine umlaufzyklische Funktion in Betracht, die insbesondere bei gleichmäßiger Drehung des Rotors, also bei Drehung mit konstanter Drehzahl, eine Sinusfunktion sein kann. Aber auch bei nicht ganz gleichmäßiger Drehung des Rotors kann die Annahme einer Sinusfunktion bzw. die Vorgabe einer Sinusfunktion sinnvoll sein.

Besonders bei einem solchen zeitlichen Offset-Verlauf des individuellen Offsetwinkels ist es vorteilhaft, die individuelle Vorsteuerrate vorzusehen und zu berücksichtigen, nämlich insbesondere über die genannte Vorsteuerung, also ohne Rückführung des resultierenden Blattwinkels. Dynamische Rückkopplungen durch eine Rückführung werden vermieden und dadurch können auch Auslegungsproblematiken für einen entsprechenden Reglervermieden werden, der alleine eine solche Berücksichtigung des individuellen Offsetwinkels durchführen würde. Hier ist besonders zu beachten, dass die Drehzahl des Rotors je nach Situation stark variieren kann. Entsprechend wäre bei einer Reglerauslegung entweder ein entsprechend robuster Regler erforderlich, oder eine individuelle Anpassung des Reglers, insbesondere seiner Verstärkung an die unterschiedlichen Geschwindigkeiten notwendig.

Der individuelle Offsetwinkel kann somit als zeitlicher Offset-Verlauf vorgegeben werden, er kann aber auch als Verlauf in Abhängigkeit von einer Position der Drehung des Rotors festgelegt werden. Insoweit kann eine Sinusfunktion als Funktion in Abhängigkeit der Rotorposition, also der Drehposition des Rotors festgelegt werden.

Das erfolgt natürlich fürjedes Rotorblatt einzeln. Beispielsweise kann eine 12-Uhr-Stellung, bei der das Rotorblatt senkrecht nach oben weist, als Drehposition mit einem Wert von 0° oder $0\pi$ angenommen werden, die dann mit drehendem Rotor kontinuierlich auf 360° bzw. $2\pi$ ansteigt wenn sich der Rotor einmal gedreht hat und der Rotor wieder in der 12-Uhr-Stellung ist. Diese Drehposition kann als Eingangsgröße für eine Sinusfunktion für den individuellen Offsetwinkel verwendet werden. Weiter unten wird noch beschrieben, inwieweit die Verwendung einer Sinusfunktion für weitere Berechnungen oder Umsetzungen im Rahmen der Bestimmung der individuellen Vorsteuerverstellrate vorteilhaft sein kann.

Gemäß einem Aspekt wird vorgeschlagen, dass jeder individuelle Offsetwinkel als zeitlicher Offset-Verlauf mit einer Nickkomponente zum Verringern eines Nickmomentes und einer Gierkomponente zum Verringern eines Giermomentes vorgegeben wird.

Durch die Vorgabe des kollektiven Blattwinkels soll eine möglichst optimale Betriebseinstellung erreicht werden, die zusammen mit gewählter Drehzahl und erzeugter Leistung möglichst einen optimalen Betriebspunkt bilden soll. Die Windgeschwindigkeit ist häufig aber über die große Rotorfläche, die die Rotorblätter überstreichen häufig nicht konstant. Insbesondere ist die Windgeschwindigkeit häufig in höheren Bereichen höher als in niedrigen Bereichen, um es exemplarisch und vereinfachend auszudrücken.

Dadurch ergeben sich umlaufzyklische Belastungsänderungen die durch die Blattverstellung berücksichtigt und verringert werden sollen. Dabei ist zwischen zwei Belastungsrichtungen zu unterscheiden, nämlich eine, die zu einem Nickmoment einer Gondel der Windenergieanlage führt, und einer die zu einem Giermoment der Gondel der Windenergieanlage führt.

Als Nickmoment wird ein Moment, also Drehmoment, bezeichnet, dass in Nickrichtung der Gondel weist, also eine Bewegung bei der sich die Gondel nach vorne und hinten bewegt, was im Bereich des Rotors auch zu einer Komponente nach oben und unten führt, bzw. die Kraft weist in diese Richtung. Das Giermoment bezeichnet ein Moment in einer Richtung um eine vertikale Drehachse der Gondel. Um diese Drehachse kann auch eine Azimutverstellung vorgenommen werden und insoweit weist das Giermoment bzw. die zugehörige Richtung auch in Richtung einer Azimutverstellung.

Je nach Position des Rotorblattes auf seinem Umlauf mit der Rotordrehung wirken sich Kräfte des Windes auf dem Rotorblatt unterschiedlich stark auf das Nickmoment oder das Giermoment aus. Bei im Wesentlichen senkrecht stehenden Rotorblättern ist eine Kraft in Richtung des Nickmomentes und dabei eine Nickkomponente besonders groß. Steht ein Rotorblatt im Wesentlichen waagerecht, wirken sich Kraft auf das Rotorblatt im Wesentlichen als Giermoment aus.

Es tritt somit für jedes Rotorblatt eine Belastung in Nickrichtung und eine Belastung in Gierrichtung auf. Beide Belastungen können Umlaufzyklisch sein mit der Drehung des Rotors, aber mit Amplituden zu unterschiedlichen Rotorpositionen. Mit anderen Worten kann die Belastung in Nickrichtung und die Belastung in Gierrichtung eine eigene Amplitude und mit eigener Phasenlage haben. Mit anderen Worten sind diese beiden Belastungsfunktionen zu einander verschoben und weisen unterschiedliche Amplituden auf.

Um jeder Belastung in Nickrichtung und jeder Belastung in Gierrichtung, jeweils für ein Rotorblatt, entgegenzuwirken, weist der zeitliche Offset-Verlauf des individuellen Offsetwinkels des betreffenden Rotorblattes eine Komponente auf, die dem Nickmoment entgegenwirkt, und als Nickkomponente bezeichnet wird, und eine Komponente auf, die dem Giermoment entgegenwirkt und als Gierkomponente bezeichnet wird. Die Nickkomponente und die Gierkomponente, die somit also als Teilblattwinkelverlauf ausgebildet oder angesehen werden können, können ihrerseits auch mit der Drehung des Rotors umlaufzyklisch ausgebildet sein, mit eigenen Amplituden und eigenen Phasenwinkel bzw. Phasenlage. Die Nickkomponente und die Gierkomponente sind selbst auch gegeneinander phasenversetzt oder phasenverschoben.

Es ist hier nun vorgesehen, jeden individuellen Offsetwinkel als einen zeitlichen Verlauf vorzusehen, der eine Nickkomponente und eine Gierkomponente aufweist. Es ist nämlich vorgesehen, die Nickkomponente und die Gierkomponente in diesem einen zeitlichen Offset-Verlauf zu überlagern.

Dadurch, dass beide Komponenten in dem zeitlichen Verlauf des individuellen Offsetwinkels überlagert sind, wird nur ein solcher zeitlicher Verlauf des individuellen Offsetwinkels benötigt. Die individuelle Vorsteuerverstellrate des Rotorblattes kann somit alleine basierend auf diesem einen zeitlichen Offsetverlauf bestimmt werden. Insbesondere benötigt eine entsprechende Vorsteuerung nur einen zeitlichen Verlauf des individuellen Offsetwinkels als Eingangsgröße.

Gemäß einem Aspekt wird vorgeschlagen, dass jeder individuelle Offsetwinkel als zeitlicher Offsetverlauf durch eine zeitabhängige Offsetfunktion vorgegeben wird, um ein Nickmoment und ein Giermoment zu verringern. Dabei ist der zeitliche Verlauf der zeitabhängigen Offsetfunktion durch einen Amplitudenparamater und einen Phasenparameter gekennzeichnet. Der Amplitudenparameter und der Phasenparameter berücksichtigen eine Verringerung sowohl des Nickmomentes als auch des Giermomentes, also gleichzeitig. Insbesondere wird durch den Amplitudenparameter und den Phasenparameter jeweils eine Nickkomponente und eine Gierkomponente berücksichtigt.

Eine einzelne Berücksichtigung der Nickkomponente als zeitlicher, zyklischer Verlauf, insbesondere als sinusförmiger Verlauf, kann durch eine entsprechende Funktion durch Amplitude und Phase beschrieben werden, nämlich insbesondere abhängig von einer Rotorposition. Durch den sich gleichmäßig oder näherungsweise gleichmäßig drehenden Rotor, also durch eine konstante oder näherungsweise konstante Drehzahl, ergibt sich dadurch auch eine entsprechende zeitliche Funktion. Auf gleiche Art und Weise kann eine Funktion für die Gierkomponente vorgesehen sein. Beide Komponenten unterscheiden sich in Amplitude und Phase, aber nicht in der Frequenz, weil sie beide von derselben umlaufenden Rotorposition abhängig sind, also von derselben Drehzahl.

Hier wurde erkannt, dass zwei solche Funktionen zusammengelegt werden können, in eine neue Funktion mit Amplitude und Phase, was hier als Amplitudenparameter bzw. als Phasenparameter bezeichnet wird. Der Amplitudenparameter berücksichtigt somit beide Amplituden der genannten Einzelfunktionen und der Phasenparameter berücksichtigt beide Phasen der genannten Einzelfunktionen. Besonders bei Annahme zweier Sinusfunktionen mit derselben Frequenz kann diese gemeinsame Funktion bestimmt werden.

Es kann also die Nickkomponente und die Gierkomponente zugleich durch eine Funktion berücksichtigt werden.

Gemäß einem Aspekt wird vorgeschlagen, dass für den Offset-Verlauf wenigstens ein Amplitudengrenzwert vorgegeben wird, für jedes Rotorblatt geprüft wird, ob der Offset-Verlauf den Amplitudengrenzwert erreicht, und wenn er erreicht wird, ein Aufschalten der individuellen Vorsteuerverstellrate auf die kollektive Verstellrate unterbrochen wird, insbesondere so, dass eine bzw. die Reglerverstellrate weiterhin auf die kollektive Verstellrate aufgeschaltet wird. Insbesondere wird die Reglerverstellrate weiterhin auf die kollektive Verstellrate aufgeschaltet, also aufaddiert, um so die gesamte Verstellrate zu bilden. Die gesamte Verstellrate ist dann also die Summe aus kollektiver Verstellrate und Reglerverstellrate.

Die Vorsteuerverstellrate nicht mehr auf die kollektive Verstellrate aufzuschalten ist also dann vorgesehen, wenn erkannt wird, dass der Offset-Verlauf den Amplitudengrenzwert erreicht oder überschreitet.

Ein Amplitudengrenzwert ist somit für jeden individuellen Offsetwinkel ein Mindestwinkel, der nicht unterschritten werden darf, oder ein Maximalwinkel, der nicht überschritten werden darf. Es kommt in Betracht, dass jeweils ein Mindestwinkel und ein Maximalwinkel vorgegeben werden, sodass der Offsetwinkel zwischen dem Mindestwinkel und dem Maximalwinkel bleiben soll, bzw. dass das überprüft wird.

Hier wird besonders angenommen, dass der Offsetverlauf ein zyklischer, insbesondere sinusförmiger Verlauf ist, der grundsätzlich unter dem Amplitudengrenzwert liegt, aber zu seinen Maximalstellen hin eine Größe des Amplitudengrenzwertes erreichen oder sogar überschreiten kann. Er kann also einen Maximalwinkel überschreiten, oder einen Minimalwinkel unterschreiten. Besonders liegt hier die Annahme zugrunde, dass der Offset-Verlauf ständig abhängig von erfassten Belastungen, oder anderen Betriebsbedingungen vorgegeben wird. Daher kann der Offset-Verlauf in seiner Amplitude schwanken.

Führt eine solche Schwankung dazu, dass der Offset-Verlauf den Amplitudengrenzwert zeitweise erreicht, bzw. erreichen würde, wird nun nicht vorgeschlagen, den Offset-Verlauf auf diesen Amplitudengrenzwert zu beschränken, ihn also auf der Höhe abzuschneiden, sondern in dem Fall nur das Aufschalten der Vorsteuerverstellrate zu unterbrechen. Es wird also nur die Vorsteuerung ausgeschaltet. Die Regelung, die die Reglerverstellrate ausgibt, bleibt aktiv.

Dadurch wird besonders das beschriebene Abschneiden einer zyklischen Funktion vermieden werden. Hier wurde besonders erkannt, dass die vorgeschlagene Vorsteuerung eine Ableitung des Offset-Verlaufs durchführt. Ist dieser Offset abgeschnitten, ergibt sich also eine unphysikalische Knickstelle, die zu unerwünschten Effekten bei der Ableitung führen kann. Durch das Deaktivieren der Vorsteuerung wird das Problem vermieden. Dadurch, dass aber der Regler weiter aktiv bleibt, kann der Offsetwinkel dennoch weiterhin berücksichtigt werden, wenn auch nicht so gut wie mit der Vorsteuerung.

Dabei wurde auch erkannt, dass die vorgeschlagene Einzelblattverstellung, also das Vorgeben der individuellen Verstellrate, zwar eine Verbesserung und Entlassung der Windenergieanlage darstellt, insbesondere auch die Gesamtlaufzeit verlängern kann, es aber hinnehmbar ist, dass eine solche Einzelblattverstellung gelegentlich und vorübergehend abgeschwächt wird.

Gemäß einem Aspekt wird vorgeschlagen, dass der Offsetverlauf über folgende Offset-funktion f(t) vorgegeben wird:

$$f(t) = A*\sin(\omega*t+\phi)$$

wobei

A eine vorgebbare Amplitude bezeichnet

$\omega$ eine Drehzahl des Rotors beschreibt und

$\phi$ eine vorgebbare Winkelverschiebung relativ zu einem Bezugswinkel beschreibt.

Durch eine solche Offsetfunktion kann der Offset-Verlauf über die Amplitude A und die Winkelverschiebung $\phi$ gekennzeichnet werden. Die Amplitude A kann auch als Amplitudenparameter bezeichnet werden, und die Winkelverschiebung $\phi$ als Phasenparameter. Durch diese Offsetfunktion kann sowohl eine Nickkomponente als auch eine Gierkomponente zugleich berücksichtigt werden.

Ebenfalls kann diese Offsetfunktion gut und kontinuierlich abgeleitet werden. Es kann dabei bereits im Vorfeld die Ableitung bestimmt werden, zumindest teilweise, sodass eine Funktion in Abhängigkeit von der Amplitude A und der Winkelverschiebung $\phi$ resultiert. Diese Ableitung bzw. eine dazu entsprechende, insbesondere Proportionale Größe kann den Ausgang der Vorsteuerung und/oder die individuelle Vorsteuerverstellrate bilden. Die individuelle Vorsteuerverstellrate liegt dann also bereits dauerhaft als Funktion vor, von der lediglich die Parametrierung angepasst werden muss, nämlich in Abhängigkeit von der vorgebbaren Amplitude A und der Winkelverschiebung $\phi$, sowie der Drehzahl $\omega$ des Rotors.

Damit wird eine Ableitung in der Vorsteuerung im laufenden Betrieb vermieden. Das vereinfacht den Rechenaufwand und es vermeidet auch etwaige Rauschverstärkung, die auftreten kann, wenn im laufenden Betrieb ein mit rauschen behaftetes Signal abgeleitet wird.

Wenn die Amplitude A und/oder die Winkelverschiebung $\phi$ zeitabhängig sind, müssten lediglich sie noch abgeleitet werden. Sind sie konstant, bedarf es keiner weiteren Ableitung mehr.

Gemäß einem Aspekt ist das Verfahren dadurch gekennzeichnet, dass die Vorsteuerverstellrate als Vorsteuer-Verlauf über folgende Vorsteuer-Funktion v(t) vorgegeben wird:

$$v(t)=A*\cos(\omega*t+\phi)*(\omega+d\phi/dt) + dA/dt*\sin(\omega*t+\phi)$$

wobei

A eine vorgebbare Amplitude bezeichnet

$\omega$ eine Drehzahl des Rotors beschreibt und

$\phi$ eine vorgebbare Winkelverschiebung relativ zu einem Bezugswinkel beschreibt.

Diese Vorsteuer-Funktion v(t) ergibt sich besonders als Ableitung aus der Offsetfunktion $f(t)=A*\sin(\omega*t+\phi)$, wenn die Amplitude A und die Winkelverschiebung $\phi$ zeitabhängige Größen bzw. Funktionen sind. Damit entspricht die vorgebbare Amplitude A und die vorgebbare Winkelverschiebung $\phi$ den entsprechenden Werten der genannten Offsetfunktion $f(t)=A*\sin(\omega*t+\phi)$.

Vorteilhaft hieran ist besonders, dass Teile der Vorsteuer-Funktion v(t), also Teile der Ableitung, vorbestimmt oder vorberechnet werden können. Bei der Anwendung im Betrieb reicht es aus, die entsprechenden Größen in die Vorsteuer-Funktion v(t) einzusetzen bzw. die Ableitung der vorgebbaren Amplitude A und der vorgebbaren Winkelverschiebung $\phi$ durchzuführen. Auch diese vorgebbare Amplitude kann den vorbeschriebenen Amplitudenparameter bilden und die vorgebbare Winkelverschiebung $\phi$ kann den vorbeschriebenen Phasenparameter bilden, besonders dann, wenn dies jeweils konstante Werte sind.

Die vorgebbare Amplitude A und/oder die vorgebbare Winkelverschiebung $\phi$ können insbesondere in Abhängigkeit von einer Belastungserfassung bestimmt werden. Eine solche Belastungserfassung kann unmittelbar am betreffenden Rotorblatt erfolgen, insbesondere an seiner Blattwurzel oder in der Nähe der Blattwurzel, oder auch anderweitig bestimmt werden, beispielsweise durch Beobachtung einer Blattbiegung. Bei der Bestimmung sowohl der Amplitude A als auch der Winkelverschiebung $\phi$ können noch Ausführungsfreiheiten bestehen, wie ein nachfolgend beschriebenes Filtern, sodass sowohl Amplitude A als auch Winkelverschiebung $\phi$ sich nicht unbedingt eindeutig aus den Belastungen ergeben werden müssen. Daher sind sie wenigstens durch Auswahl ihrer Berechnung vorgebbar.

Gemäß einem Aspekt wird vorgeschlagen, dass die Amplitude A und die Winkelverschiebung $\phi$ der Offsetfunktion $f(t)=A*\sin(\omega*t+\phi)$ in Abhängigkeit von einer Belastungserfassung bestimmt werden. Eine solche Bestimmung in Abhängigkeit von der Belastungserfassung wurde oben bereits erläutert. Hier kommt insbesondere in Betracht, dass ein Nickmoment und ein Giermoment erfasst werden, bzw. eine Nickmomentkomponente des jeweiligen Rotorblattes und eine Giermomentkomponente des jeweiligen Rotorblattes erfasst werden. Diese können jeweils durch eine sinusförmige Funktion mit Amplitude und Phasenwinkel, also Winkelverschiebung gekennzeichnet sein, wobei die Frequenz dieselbe ist. Daraus lässt sich eine Sinusfunktion für beide Belastungen, also für Nickmoment und Giermoment, ableiten, sodass sich eine Amplitude und eine Winkelverschiebung für beides zusammen für jedes Rotorblatt ergibt.

Insbesondere wird vorgeschlagen, dass die Amplitude A und/oder die Winkelverschiebung $\phi$ gefilterte Größen bilden. Hier wird besonders berücksichtigt, dass bei einer Weiterberechnung zum Bestimmen der Vorsteuerverstellrate eine Ableitung durchgeführt wird, die auch eine Ableitung der Amplitude A und der Winkelverschiebung $\phi$ beinhalten kann. Besonders eine der Amplitude bzw. der Winkelverschiebung überlagerte höherfrequente Störgröße, insbesondere Rauschgröße, kann bei der Ableitung ungünstig sein. Durch das Filtern kann das Problem gelöst, zumindest verringert werden.

Insbesondere wird vorgeschlagen, dass in Abhängigkeit von der Belastungserfassung eine Voramplitude Av und/oder eine Vorwinkelverschiebung $\phi$v ermittelt werden. Im Grunde entspricht die Voramplitude Av der ungefilterten Amplitude A und die Vorwinkelverschiebung $\phi$v der ungefilterten Winkelverschiebung $\phi$. Entsprechend wird aus der Voramplitude Av und/oder der Vorwinkelverschiebung $\phi$v die Amplitude A bzw. die Winkelverschiebung $\phi$ jeweils durch Filtern der Voramplitude Av bzw. der Vorwinkelverschiebung $\phi$v bestimmt. Es kommt auch in Betracht, dass als Filter oder statt Filter, eine Rampe vorgegeben wird, als maximale Änderungsgeschwindigkeit für die Voramplitude Av und/oder für die Vorwinkelverschiebung $\phi$v. Damit werden zu starke Anstiege vermieden und damit wird die maximale Amplitude des zeitlich abgeleiteten Signals vorgebeben.

Alternativ wird vorgeschlagen, in Abhängigkeit von einer Lasterfassung die Amplitude A und die Winkelverschiebung $\phi$ als konstante Werte vorzugeben, und damit eine vereinfachte Vorsteuerfunktion vs(t) aus einer Ableitung der Offsetfunktion $f(t)=A*\sin(\omega*t+\phi)$ vorgeben zu können. Damit ergibt sich nämlich die folgende vereinfachte Vorsteuerfunktion vs(t) wie folgt:

$$vs(t)=A*cos(\omega*t+\phi)*\omega$$

Besonders eine solche vereinfachte Vorsteuerfunktion vs(t) ist gut vorherbestimmbar und vermeidet in der Online-Anwendung die Notwendigkeit eines stetigen Ableitens der Amplitude A und der Winkelverschiebung $\phi$. Stattdessen brauchen nur diese vereinfachten konstanten Werte bestimmt zu werden, insbesondere aus der vorstehend beschriebenen Belastungserfassung also insbesondere aus jeweils einer Nickmomentkomponente und einer Giermomentkomponente. Diese Werte können dann einfach in diese vereinfachte Vorsteuerfunktion vs(t) eingegeben werden, zusammen mit der Rotordrehzahl $\omega$. Dadurch werden auch die Probleme beim Ableiten verrauschter Signale vermieden.

Hierzu wird aber besonders vorgeschlagen, dass diese beiden Größen, also die Amplitude A und die Winkelverschiebung $\phi$, nur zum Zwecke der Ableitung als konstant angenommen werden. Es wird somit vereinfachend angenommen, dass diese Größen konstant sind. Es hat sich aber gezeigt, dass eine solche Annahme häufig zulässig ist. Besonders kann häufig angenommen werden, dass sich diese beiden Größen nur langsam ändern.

Hier wurde besonders erkannt, dass zwar die Offsetfunktion einen sich mit der Zeit ändernden Verlauf hat, nämlich die sinusförmige Funktion, dass aber die Amplitude A und die Winkelverschiebung $\phi$ als charakteristische Größen dieser Funktion sich wesentlich langsamer ändern. Somit kann diese vereinfachte Vorsteuerfunktion vorgegeben werden, trotzdem aber eine sich ändernde Amplitude A und eine sich ändernde Winkelverschiebung $\Phi$ berücksichtigen.

Erfindungsgemäß wird auch eine Windenergieanlage vorgeschlagen. Die Windenergieanlage weist einen Rotor mit mehreren Rotorblättern auf, die Rotorblätter sind in ihrem Blattwinkel verstellbar und jedes Rotorblatt ist individuell ansteuerbar. Zudem weist die Windenergieanlage eine Steuereinrichtung auf, und ist zum Durchführen einer Einzelblattverstellung vorbereitet. Dabei ist die Windenergieanlage, insbesondere ihre Steuereinrichtung, dazu eingerichtet, ein Verfahren nach einem der vorstehend beschriebenen Aspekte durchzuführen. Dazu kann das Verfahren in der Windenergieanlage, insbesondere in der Steuereinrichtung implementiert werden.

Gemäß einem Aspekt ist vorgesehen, dass die Windenergieanlage eine Erfassungseinrichtung aufweist, zum Erfassen einer Belastung einer Windenergieanlage. Das können besonders Belastungsmesseinrichtungen wie Dehnungsmessstreifen jeweils an dem Rotorblatt im Bereich seiner Blattwurzel sein.

Insbesondere ist die Erfassungseinrichtung vorbereitet zum Erfassen einer Nickmomentkomponente und einer Giermomentkomponente für jedes Rotorblatt. Die Windenergieanlage insbesondere die Steuereinrichtung, ist dazu vorbereitet, aus der erfassten Nickmomentkomponente und der erfassten Giermomentkomponente einen für das betreffende Rotorblatt individuellen Offsetwinkel zu bestimmen. Weiter ist die Windenergieanlage bzw. ihre Steuereinrichtung dazu vorbereitet, aus dem individuellen Offsetwinkel für das betreffende Rotorblatt eine individuelle Vorsteuerverstellrate zu bestimmen.

Die Ausführung hierzu ergibt sich aus der Beschreibung zu den entsprechenden Verfahrensaspekten, wie weiter oben erläutert.

Für die Windenergieanlage, aber auch für das Verfahren insgesamt, kommt auch in Betracht, dass die Vorsteuerverstellrate unmittelbar aus erfassten Belastungen bestimmt wird, indem eine ausdrückliche Ausgabe des individuellen Offsetwinkels als Zwischengröße entbehrlich sein kann.

Die individuelle Offsetabweichung kann aus der Vorsteuerverstellrate abgeleitet werden, oder es kann für die Offsetabweichung ein individueller Offsetwinkel bspw. aus den erfassten Belastungen bestimmt werden, ohne aber für die Vorsteuerverstellrate verwendet zu werden.

Nachfolgend wird die Erfindung anhand von Ausführungsformen unter Bezugnahme auf die begleitenden Figuren exemplarisch näher erläutert.

Figur 1 zeigt eine Windenergieanlage in einer perspektivischen Darstellung.

Figur 2 zeigt schematisch eine Reglungsstruktur einer herkömmlichen Einzelblattverstellung.

Figur 3 zeigt schematisch eine Einzelblattsteuerung über eine Verstellratenvorgabe.

Figur 4 zeigt eine schematische Reglungsstruktur einer Einzelblattverstellung über eine Pitchrate mit Vorsteuerung und Offsetregler zum Steuern des aufzuschaltenden Einzelblattwinkels.

Figur 5 zeigt schematisch eine Gesamtstruktur einer Einzelblattverstellung mit Vorsteuerung und Offsetregler für den aufzuschaltenden Offsetwinkel.

Figur 6 zeigt ein vereinfachtes Diagramm eines möglichen Offsetwinkelverlaufs eines Rotorblatts.

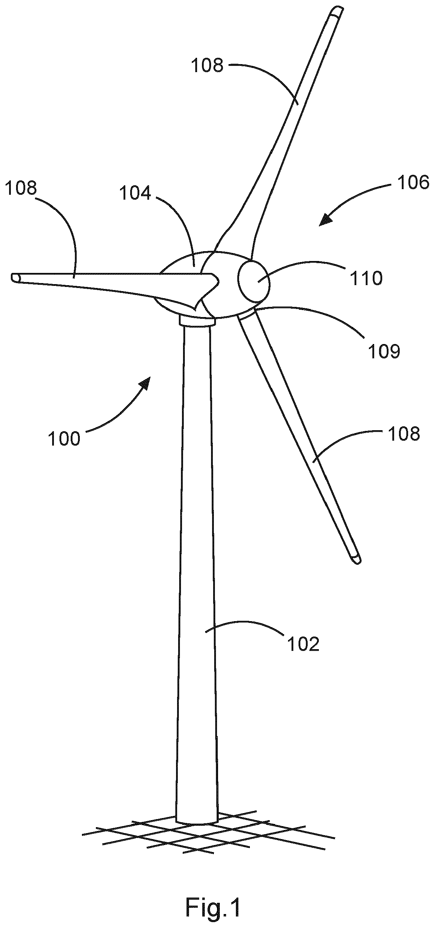

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

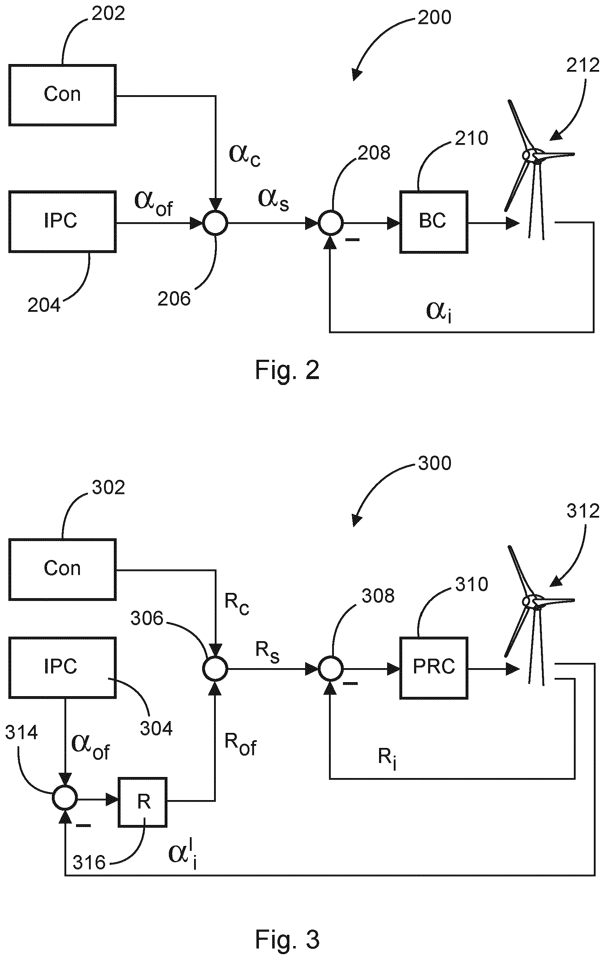

Fig. 2 zeigt eine Reglungsstruktur 200, die eine herkömmliche Blattwinkelreglung mit Einzelblattverstellung betrifft. Die Struktur zeigt einen Betriebssteuerblock 202, der einen kollektiven Blattwinkel $\alpha_C$ vorgibt. Dieser Betriebssteuerblock 202 beinhaltet beispielsweise eine bekannte Drehzahlreglung, die zum Regeln der Drehzahl den Blattwinkel als Stellgröße ausgibt. Diese Betriebssteuerung betrifft somit einen für alle Rotorblätter gleichen Blattwinkel, der als kollektiver Blattwinkel bezeichnet wird. Er kann synonym auch als gemeinsamer Blattwinkel bezeichnet werden.

Außerdem ist eine Einzelblattsteuerung 204 vorgesehen, die für jedes Rotorblatt einen Offsetwinkel $\alpha_{of}$ vorsieht. Insoweit zeigt Fig. 2 die Struktur für ein einziges Blatt. Üblicherweise weist eine Windenergieanlage drei Rotorblätter auf und entsprechend wären drei solcher Steuerungsstrukturen erforderlich.

Der Offsetwinkel $\alpha_{of}$ und der kollektive Blattwinkel $\alpha_C$ werden an der ersten Summierstelle 206 zum Blattsollwinkel $\alpha_S$ aufaddiert. Insoweit ergeben sich bei drei Rotorblättern und entsprechend drei Strukturen auch drei Blattsollwinkel. Da hier aber zur Veranschaulichung nur die Struktur für ein Rotorblatt gezeigt wird, wird auf etwaige Indizes zum Anzeigen eines konkreten Rotorblattes verzichtet. Die vorgestellte Struktur ist insoweit für alle Rotorblätter identisch.

Der Blattsollwinkel $\alpha_S$ wird dann an der zweiten Summierstelle 208 mit einem erfassten Ist-Winkel $\alpha_i$ verglichen. Das Ergebnis ist eine Regelabweichung, die in der Blattreglung gemäß den Blattreglungsblock 210 weiterverarbeitet wird, um die schematisch dargestellte Windenergieanlage 212 bzw. dort den entsprechenden Pitchmotor des Rotorblattes anzusteuern. Dadurch ergibt sich der erfasste Blattwinkel $\alpha_i$, der wie beschrieben zurückgeführt wird.

Über eine solche Struktur gemäß Fig. 2 ist also eine Einzelblattverstellung umsetzbar, die Reglungsdynamik kann durch die Vorgabe des absoluten Blattwinkels für den kollektiven Blattwinkel aber ungünstig sein. Insbesondere hat sich herausgestellt, dass vorteilhafterweise bereits durch den Betriebssteuerblock statt eines kollektiven Blattwinkels eine kollektive Verstellrate vorgegeben werden kann, die auch als kollektive Pitchrate bezeichnet wird.

Eine solche Struktur ist in Fig. 3 dargestellt. Die Reglungsstruktur 300 der Figur 3 weist somit ebenfalls einen Betriebssteuerblock 302 auf, der ebenfalls eine Drehzahlreglung und auch andere Betriebssteurungen beinhalten kann und dabei einen kollektiven Blattwinkel erzeugen kann. Bei dieser Struktur gibt der Betriebssteuerblock 302 allerdings eine kollektive Blattrate Rc aus.

Eine Einzelblattsteuerung 304 ist ebenfalls vorgesehen, die einen Offsetwinkel $\alpha_{of}$ ausgibt. Diese wird an einer dritten Summierstelle 314 mit einem erfassten Blattwinkel $\alpha'_i$ verglichen. Der erfasste Blattwinkel $\alpha'_i$ kann somit ein um den kollektiven Blattwinkel bereinigter Blatt-Ist-Winkel sein. Es kommt aber auch in Betracht, dass der tatsächliche Blattwinkel auf die dritte Summierstelle 314 gegeben wird, stattdessen der Offsetwinkel $\alpha_{of}$ um den kollektiven Blattwinkel bereinigt ist. Jedenfalls ergibt sich an der dritten Summierstelle 314 durch die Differenzbildung eine Reglungsabweichung, die anzeigt, wie weit der Offsetwinkel $\alpha_{of}$ erfolgreich aufgeschaltet wurde.

Die Abweichung des Blattwinkels wird dann auf den Offsetregler 316 gegeben, der eine individuelle Verstellrate $R_{of}$ bestimmt. Diese individuelle Verstellrate $R_{of}$ und die kollektive Verstellrate Rc werden in der ersten Summierstelle 306 aufaddiert und ergeben die Soll-Verstellrate bzw. Sollpitchrate für das betreffende Rotorblatt.

In der zweiten Summierstelle 308 erfolgt ein Sollistwertvergleich mit der Ist-Verstellrate bzw. Istpitchrate $R_i$, die an der Windenergieanlage 312 erfasst wurde. Diese Regelabweichung als Ausgang der zweiten Summierstelle 308 wird dann in der Verstellratensteuerung 310 umgesetzt und führt zu einer Ansteuerung der Windenergieanlage insbesondere eines entsprechenden Pitchantriebssystems.

Problematisch bei dieser Struktur der Figur 3 ist, dass der Offsetwinkel mit einem erfassten Blattwinkel verglichen und die Abweichung mit dem Offsetregler 316 ausgeregelt wird. Ein solches Ausregeln ist zwar wünschenswert, ein Regelverhalten mit guter stationärer Genauigkeit kann aber zu einer schlechten, insbesondere langsamen Dynamik führen. Insbesondere kann in dem Offsetregler 316 ein Proportional- oder Integralverhalten vorhanden sein und/oder eine träge Dynamik vorgesehen sein, um zu starke Regelausschläge bei Änderungen der Führungsgröße zu vermeiden. Mit anderen Worten ist ein Regler für stationäre Genauigkeit dafür vorgesehen, auch geringe Abweichungen auszuregeln. Dies kann er langsam machen, sodass er dann insgesamt träge ist, oder schnell, was aber bei Führungsänderungen zu starken Regelaktivitäten führen kann.

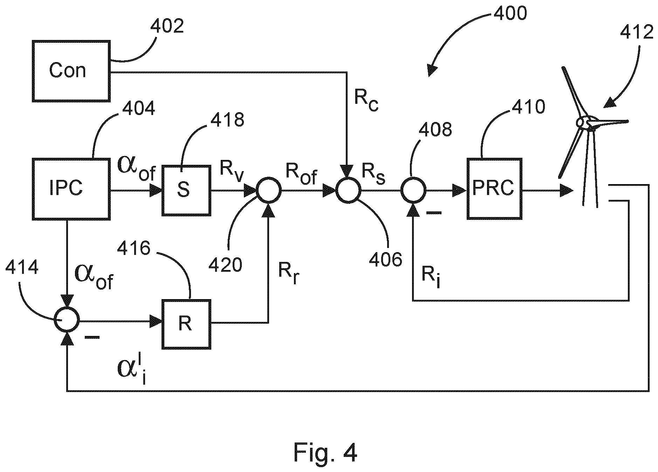

Fig. 4 zeigt eine Reglungsstruktur 400, die insoweit zu der Reglungsstruktur 300 der Fig. 3 eine Verbesserung erreichen soll und die erfindungsgemäße Lösung erläutert. Zunächst wird auch hier in einem Betriebssteuerblock 402 eine kollektive Verstellrate Rc ausgegeben. Die Betriebssteuerblöcke 402 und 302 können identisch sein.

Ebenfalls ist eine Einzelblattsteuerung 404 vorgesehen, die einen Offsetwinkel $\alpha_{of}$ ausgibt. Zur besseren Erläuterung der Funktionsweise zeigt die Reglungsstruktur 400, dass die Einzelblattsteuerung 404 zweimal den Offsetwinkel $\alpha_{of}$ ausgibt. Dies dient aber der Veranschaulichung und es kann genauso gut vorgesehen sein, nur an einer Stelle den Offsetwinkel $\alpha_{of}$ auszugeben oder es kommt auch eine andere strukturelle Umsetzung in Betracht, bei der z.B. die Vorsteuerverstellrate unmittelbar aus Belastungsdaten abgeleitet wird.

Jedenfalls ist vorgesehen, dass der Offsetwinkel $\alpha_{of}$ unter anderem in die Vorsteuerung 418 gegeben wird. Die Vorsteuerung 418 bestimmt aus dem individuellen Offsetwinkel $\alpha_{of}$ eine individuelle Vorsteuerverstellrate $R_v$. Diese Vorsteuerverstellrate $R_v$ ist dazu vorgesehen, den Offsetwinkel $\alpha_{of}$ bereits im Wesentlichen umzusetzen und sollte dazu auf die kollektive Verstellrate Rc aufaddiert werden, um dadurch eine Soll-Verstellrate insgesamt zu erhalten.

Die Vorsteuerung 418 kann dazu eine Ableitung des Offsetwinkels $\alpha_{of}$ bilden, ggf. mit einem Verstärkungsfaktor versehen, um dadurch unmittelbar eine entsprechende Verstellrate zu bestimmen. Es kommt aber auch in Betracht, dass dazu äquivalente Umsetzungen durchgeführt werden, wie beispielsweise eine vereinfachte Ableitung vorzunehmen, zuvor eine Filterung vorzunehmen, und/oder einen Teil der Ableitung vorher zu berechnen. Es kommt auch in Betracht, eine solche Vereinfachung vorzunehmen, dass die Ableitung vollständig vorherberechnet werden kann und nur noch situationsbedingt konkrete Parameter einzusetzen sind.

Durch eine solche Vorsteuerung kann somit eine entsprechende Verstellrate schnell und gezielt für den Offsetwinkel umgesetzt werden. Eine stationäre oder quasi stationäre Abweichung kann weder erkannt noch ausgeregelt werden.

Daher ist zusätzlich vorgesehen, den Offsetwinkel $\alpha_{of}$ in der dritten Summierstelle 414 mit einem erfassten Blattwinkel $\alpha'_i$ zu vergleichen. Wie in der Reglungsstruktur der Fig. 3 kann der erfasste Blattwinkel ein modifizierter Blattwinkel sein, nämlich ein gemessener Blattwinkel modifiziert um einen kollektiven Blattwinkel. Auch hier kann stattdessen eine Modifizierung um den kollektiven Blattwinkel in dem Offsetwinkel $\alpha_{of}$ vorgenommen werden. In dem Fall würde eine solche Modifizierung aber nur für den Offsetwinkel $\alpha_{of}$ durchgeführt werden, der in die dritte Summierstelle 414 eingeht. Der Wert, der in die Vorsteuerung 418 eingeht, sollte nicht modifiziert werden.

Jedenfalls wird ein Soll-Istwert-Vergleich in der dritten Summierstelle 414 durchgeführt und davon abhängig eine Reglerverstellrate $R_r$ bestimmt. Dies erfolgt mittels des Offsetreglers 416, der aber nun anders parametriert sein kann als der Offsetregler 316 der Fig. 3, denn der Offsetregler 416 der Fig. 4 braucht eine schnelle dynamische Umsetzung des Offsetwinkels $\alpha_{of}$ in eine Vorsteuerverstellrate nicht durchzuführen. Der Offsetregler 416 kann zielgerichtet auf das reine Ausregeln oder anderweitige Berücksichtigen einer Reglerabweichung ausgelegt sein.

Die Vorsteuerverstellrate $R_v$ und die Reglerverstellrate $R_r$ werden an der vierten Summierstelle 420 zur individuellen Verstellrate $R_{of}$ aufaddiert. Diese individuelle Verstellrate $R_{of}$ ist somit die insgesamt von der Vorsteuerung 418 und dem Offsetregler 416 erzeugte Verstellrate für den Offsetwinkel. Sie wird an der ersten Summierstelle 406 auf die kollektive Verstellrate Rc aufaddiert, sodass sich die gesamte Soll-Verstellrate Rs ergibt. Diese kann dann ähnlich wie in Fig. 3 in der zweiten Summierstelle 408 mit einer erfassten Ist-Verstellrate $R_i$ verglichen werden, sodass sich ein Regelfehler ergibt. Dieser wird in der Blattratenregelung 410 umgesetzt, und die Blattratenregelung 410 steuert dann die Windenergieanlage 412 an, insbesondere das entsprechende Blattverstellsystem.

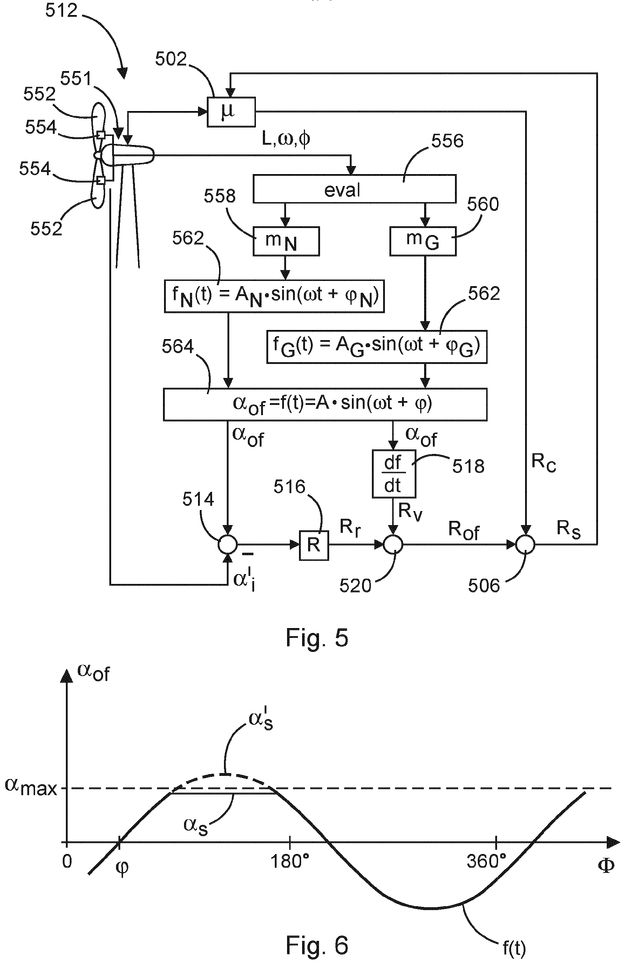

Fig. 5 veranschaulicht einen Gesamtüberblick über das zugrundeliegende Verfahren. Dazu ist eine Windenergieanlage 512 angedeutet. Diese Windenergieanlage 512 weist drei Rotorblätter 552 auf, von denen in der schematischen Darstellung nur zwei zu erkennen sind. Jedes dieser Rotorblätter 552 weist mehrere Lastsensoren 554 auf. Diese können an dem betreffenden Rotorblatt 552 jeweils im Bereich einer Rotorblattwurzel als Dehnungsmessstreifen vorgesehen sein, um ein Beispiel zu nennen.

Schematisch ist angedeutet, dass entsprechende Lastsignale L an einen Evaluierungsblock 556 gegeben werden. Dieser Evaluierungsblock wertet diese Messwerte aus und kann dazu auch weitere Betriebsdaten berücksichtigen, wie die Rotordrehzahl $\omega$ und die jeweilige Rotorposition $\Phi$.

Davon abhängig kann der Evaluierungsblock 556 eine Nickmomentkomponente $m_N$ und eine Giermomentkomponente $m_G$ berechnen. Dies wird durch den Nickmomentblock 558 und den Giermomentblock 560 verdeutlicht. Die Nickmomentkomponente $m_N$ und die Giermomentkomponente $m_G$ bilden somit nicht das gesamte Nickmoment bzw. Giermoment, sondern nur den Anteil der dem jeweils ausgewerteten Rotorblatt zuzuordnen ist. Insoweit illustriert Fig. 5 lediglich die Auswertung für ein Rotorblatt.

In dem Nickmomentblock 558 und dem Giermomentblock 560 erfolgt dann eine Berechnung einer Offsetfunktion, $f_N(t)$ für das Nickmoment und $f_G(t)$ für das Giermoment. Diese Offsetfunktion gibt an, wie ein Offsetwinkelverlauf in Abhängigkeit von der Drehzahl $\omega$ des Rotors 551 gewählt werden könnte, um die Nickmomentkomponente mr, bzw. Giermomentkomponente $m_G$ möglichst zu kompensieren. Das veranschaulichen der erste und zweite Einzeloffsetblock 561 bzw. 562. Die Teiloffsetfunktionen die in diesen beiden Blöcken gezeigt sind, werden in dem Gesamtoffsetblock 564 in eine gemeinsame Offsetfunktion f(t) zusammengeführt.

Diese Offsetfunktion f(t) gibt somit eine Zeitfunktion für den Offsetwinkel $\alpha_{of}$ wieder. Entsprechend gibt der Gesamtoffsetblock 564 den Offsetwinkel $\alpha_{of}$ aus. Auch das erfolgt hier in der Darstellung der Fig. 5 veranschaulichend so, dass zwei Offsetwinkel $\alpha_{of}$ ausgegeben werden, die aber identisch sein können. Der Gesamtoffsetblock 564 kann somit der Einzelblattsteuerung 404 der Fig. 4 entsprechen. Die weitere Verarbeitung des Offsetwinkels $\alpha_{of}$ entspricht somit auch der in Figur 4 dargestellten.

Somit ist eine Vorsteuerung 518 vorgesehen, bei der in Fig. 5 deutlich gemacht wird, dass sie im Wesentlichen eine Ableitung bildet. Auch für diese Vorsteuerung 518 gilt, dass es nicht unbedingt eine exakte Ableitung sein muss, sondern dass auch Vereinfachungen und/oder zusätzliche Funktionen wie Filtern oder das Vorsehen eines Verstärkungsfaktors in Betracht kommen kann. Das Ergebnis ist somit eine Vorsteuerverstellrate $R_v$.

Außerdem ist ein Offsetregler 516 vorgesehen, der eine Regelabweichung als Differenz zwischen dem Offsetwinkel $\alpha_{of}$ und einem erfassten Blattwinkel $\alpha'_i$ erhält. Auch hier wird drauf hingewiesen, dass der erfasste Blattwinkel $\alpha'_i$ um den kollektiven $\alpha_C$ modifiziert sein kann. Alternativ kann der in diese dritte Summierstelle 514 eingehende Offsetwinkel $\alpha_{of}$ modifiziert sein.

Der Offsetregler 516 gibt somit eine Reglerverstellrate $R_r$ aus und diese wird an der vierten Summierstelle 520 zur individuellen Verstellrate $R_{of}$ aufaddiert.

Die individuelle Verstellrate $R_{of}$ wird schließlich an der ersten Summierstelle 506 auf die kollektive Verstellrate Rc aufaddiert, sodass sich die Sollverstellrate Rs, also die gesamte Sollverstellrate ergibt. Diese Sollverstellrate Rs wird dann in den Betriebssteuerblock 502 eingegeben, der zuvor auch die kollektive Pitchrate Rc erzeugt hat. Dieser Betriebssteuerblock 502 führt somit mehrere Funktionen aus, also mehr Funktionen als der Betriebssteuerblock 402 der Figur 4. Auch die zweite Summierstelle 408 der Fig. 4 kann sinngemäß in dem Betriebssteuerblock 502 der Struktur der Figur 5 realisiert sein. Jedenfalls interagiert der Betriebssteuerblock 502 mit der Windenergieanlage 512, bzw. der ist schließlich auch Teil der Windenergieanlage 512, und kann somit sowohl steuernd eingreifen als auch Messwerte empfangen, auswerten und weiterleiten.

Somit werden Lasten erfasst, hinsichtlich Nick- und Giermoment berücksichtigt, davon abhängig eine gesamte Offsetfunktion zum Bestimmen des Offsetwinkels erzeugt und davon abhängig die Einzelblattverstellung durchgeführt. Die Einzelblattverstellung erfolgt durch Vorgabe einer individuellen Verstellrate $R_{of}$ und die hängt von der Vorsteuerung 518 und dem Offsetregler 516 ab. Sie wird dann auf die kollektive Pitchrate Rc aufaddiert um dann eine Sollverstellrate Rs zu erhalten. Diese Sollverstellrate Rs berücksichtigt dann sowohl die Blatteinstellung für die generelle Anlagensteuerung als auch die individuelle Lastreduzierung.

Fig. 6 veranschaulicht eine solche Offsetfunktion f(t). Sie ist hier in Abhängigkeit von dem Rotorwinkel $\Phi$ aufgetragen und ist offensichtlich über 360° zyklisch. Sie kann als Sinusfunktion angesehen werden.

Sie geht nicht durch den Nullpunkt sondern schneidet die Abszisse bei der Winkelverschiebung $\phi$. Die Winkelverschiebung ist relativ zu einem Bezugswinkel und kann hier als Null angesehen werden.

Insoweit zeigt die Figur 6 die Offsetfunktion als Verlauf des Offsetwinkels $\alpha_{of}$. Es kann für den Offsetwinkel $\alpha_{of}$ ein Amplitudengrenzwert $\alpha_{max}$ vorgesehen sein. Für den ist zudem eine waagerechte gestrichelte Linie eingezeichnet. Erreicht die Offsetfunktion f(t), also der Offsetwinkel $\alpha_{of}$, diesen Amplitudengrenzwert $\alpha_{max}$, müsste die Offsetfunktion f(t) abgeschnitten werden, was in dem Diagramm durch das Funktionsteilstück $\alpha_S$ veranschaulicht ist. Der gestrichelte Verlauf der Offsetfunktion f(t), $\alpha_S'$, darf nicht umgesetzt werden.

Es wird aber vorgeschlagen, nicht die Offsetfunktion abzuschneiden, wie dies durch den Abschnitt $\alpha_S$ veranschaulicht ist, sondern die Vorsteuerung für den Moment zu unterbrechen. Während der Unterbrechung kann weiterhin die Messwerterfassung und Auswertung durchgeführt werden, also normal weiterlaufen. Es kann auch weiterhin eine Regelung des Offsetwinkels aktiv sein, aber die Vorsteuerung und damit das Aufschalten der Vorsteuerverstellrate wird temporär deaktiviert.

Veranschaulichend an dem Ablaufdiagramm der Fig. 5 wird somit nur die Vorsteuerung 518 deaktiviert. Der gesamte Offsetblock 564 kann dabei weiterhin, trotz Unterbrechung der Einzelblattverstellung, die Offsetfunktion f(t) berechnen und es kann dann festgestellt werden, ob der Amplitudengrenzwert $\alpha_{max}$ noch erreicht wird bzw. erreicht werden würde, oder nicht. Entsprechend kann dann die Vorsteuerung 518 wieder in Betrieb genommen werden.

**Patentansprüche**

1. Verfahren zum Steuern einer Windenergieanlage (100), wobei

- die Windenergieanlage einen Rotor (106) mit mehreren Rotorblättern (108) aufweist,
- die Rotorblätter (108) in ihrem Blattwinkel verstellbar sind,
- jedes Rotorblatt (108) individuell ansteuerbar ist,
- zum individuellen Ansteuern jeweils eine gesamte Verstellrate $R_{of}$ vorgegeben wird, die eine vorgesehene Änderungsgeschwindigkeit des jeweiligen Blattwinkels angibt,
- ein für alle Rotorblätter (108) gleicher kollektiver Blattwinkel vorgesehen ist,
- eine für alle Rotorblätter gleiche kollektive Verstellrate (Rc) eine vorgesehene Änderungsgeschwindigkeit des kollektiven Blattwinkels beschreibt,
- für jedes Rotorblatt ein individueller Offsetwinkel ($\alpha_{of}$) vorgegeben wird, der einen Wert angibt, um den der Blattwinkel von dem kollektiven Blattwinkel ($\alpha_c$) abweichen soll,
- für jedes Rotorblatt (108) aus dem individuellen Offsetwinkel eine individuelle Vorsteuerverstellrate bestimmt wird, die eine Verstellrate angibt, die zum Erreichen des Offsetwinkels vorgesehen ist,

- für jedes Rotorblatt in Abhängigkeit von einem Vergleich des individuellen Offsetwinkels ($\alpha_{of}$) und einem erfassten Blattwinkel des Rotorblattes eine individuelle Offsetabweichung bestimmt wird, und
- die gesamte Verstellrate jedes Rotorblatts in Abhängigkeit von

    - dem kollektiven Blattwinkel und/oder der kollektiven Verstellrate,
    - der individuellen Vorsteuerverstellrate und
    - der individuellen Offsetabweichung

bestimmt wird.

2. Verfahren nach Anspruch 1, **dadurch gekennzeichnet, dass**

    - die individuelle Vorsteuerverstellrate mittels einer Vorsteuerung (414) aus dem individuellen Offsetwinkel bestimmt wird, und
    - aus der individuellen Offsetabweichung mittels eines Offsetreglers (416) eine Reglerverstellrate bestimmt wird, um die individuelle Offsetabweichung auszuregeln, wobei
    - die gesamte Verstellrate aus der kollektiven Verstellrate, der Vorsteuerverstellrate und der Reglerverstellrate bestimmt wird, insbesondere aus ihrer Summe.

3. Verfahren nach Anspruch 1 oder 2, **dadurch gekennzeichnet, dass**
die Vorsteuerverstellrate unabhängig von dem erfassten Blattwinkel bestimmt wird, insbesondere unabhängig von der individuellen Offsetabweichung.

4. Verfahren nach einem der vorstehenden Ansprüche, **dadurch gekennzeichnet, dass** der individuelle Offsetwinkel als zeitlicher Offset-Verlauf, insbesondere durch eine zeitabhängige und/oder von einer Position oder Drehung des Rotors abhängige Offset-Funktion vorgegeben wird.

5. Verfahren nach einem der vorstehenden Ansprüche, **dadurch gekennzeichnet, dass** jeder individuelle Offsetwinkel als zeitlicher Offset-Verlauf mit

    - einer Nickkomponente zum Verringern eines Nickmomentes und
    - einer Gierkomponente zum Verringern eines Giermomentes vorgegeben wird, insbesondere, dass
    - die Nickkomponente und die Gierkomponente in dem zeitlichen Verlauf des individuellen Offsetwinkels überlagert sind.

6. Verfahren nach einem der vorstehenden Ansprüche, **dadurch gekennzeichnet, dass**
jeder individuelle Offsetwinkel als zeitlicher Offset-Verlauf durch eine zeitabhängige Offset-Funktion, insbesondere zyklische Offset-Funktion, vorgegeben wird, um

    - ein Nickmoment und ein Giermoment zu verringern, wobei
    - der zeitliche Verlauf durch einen Amplitudenparameter (A) und einen Phasenparameter ($\phi$) gekennzeichnet ist und
    - der Amplitudenparameter (A) und der Phasenparameter ($\phi$) eine Verringerung des Nickmomentes und des Giermomentes berücksichtigen, insbesondere, dass
    - der Amplitudenparameter und der Phasenparameter jeweils eine Nickkomponente und eine Gierkomponente berücksichtigen.

7. Verfahren nach einem der vorstehenden Ansprüche, **dadurch gekennzeichnet, dass**

    - für einen bzw. den Offset-Verlauf, wenigstens ein Amplitudengrenzwert vorgegeben wird,
    - für jedes Rotorblatt geprüft wird, ob der Offset-Verlauf den Amplitudengrenzwert erreicht, und
    - wenn er erreicht wird, ein Aufschalten der individuellen Vorsteuerverstellrate auf die kollektive Verstellrate unterbrochen wird, insbesondere so, dass eine bzw. die Reglerverstellrate weiterhin auf die kollektive Verstellrate aufgeschaltet wird.

8. Verfahren nach einem der vorstehenden Ansprüche, **dadurch gekennzeichnet, dass** ein bzw. der Offset-Verlauf über folgende Offset-Funktion f(t) vorgegeben wird:

$$f(t)= A*\sin(\omega*t+\phi)$$

wobei

A eine vorgebbare Amplitude bezeichnet
$\omega$ eine Drehzahl des Rotors beschreibt und
$\phi$ eine vorgebbare Winkelverschiebung relativ zu einem Bezugswinkel beschreibt.

9.  Verfahren nach einem der vorstehenden Ansprüche, **dadurch gekennzeichnet, dass**

die Vorsteuerverstellrate als Vorsteuer-Verlauf über folgende Vorsteuer-Funktion v(t) vorgegeben wird:

$$v(t)=A*\cos(\omega*t+\phi)*(\omega+d\phi/dt) + dA/dt*\sin(\omega*t+\phi)$$

wobei

A eine bzw. die vorgebbare Amplitude bezeichnet
$\omega$ eine bzw. die Drehzahl des Rotors beschreibt und
$\phi$ eine bzw. die vorgebbare Winkelverschiebung relativ zu einem Bezugswinkel beschreibt.

10. Verfahren nach einem der vorstehenden Ansprüche, **dadurch gekennzeichnet, dass**,

- eine bzw. die Amplitude A und eine bzw. die Winkelverschiebung $\phi$ einer bzw. der Offsetfunktion f(t)= A*\sin($\omega$*t+$\phi$) in Abhängigkeit von einer Belastungserfassung bestimmt werden, und insbesondere
- die Amplitude A und/oder die Winkelverschiebung $\phi$ gefilterte Größen bilden, insbesondere so, dass
- in Abhängigkeit von der Belastungserfassung eine Voramplitude $A_v$ und/oder eine Vorwinkelverschiebung $\phi_v$ ermittelt werden, und

    - aus der Voramplitude $A_v$ und/oder der Vorwinkelverschiebung $\phi_v$ die Amplitude A bzw. die Winkelverschiebung $\phi$ jeweils durch Filtern der Voramplitude $A_v$ und/oder der Vorwinkelverschiebung $\phi_v$ bestimmt werden, und/oder jeweils durch Vorgeben einer Rampe als maximale Änderungsgeschwindigkeit für die Voramplitude $A_v$ und/oder für die Vorwinkelverschiebung $\phi_v$

oder
in Abhängigkeit von einer Lasterfassung die Amplitude A und die Winkelverschiebung $\phi$ als konstante Werte vorgegeben werden und damit eine vereinfachte Vorsteuer-Funktion vs(t) aus einer Ableitung der Offsetfunktion f(t)=A*\sin($\omega$*t+$\phi$) vorgegeben wird als:

$$vs(t)=A*\cos(\omega*t+\phi)*\omega.$$

11. Windenergieanlage (100), wobei

- die Windenergieanlage (100) einen Rotor (106) mit mehreren Rotorblättern (108) aufweist,
- die Rotorblätter (108) in ihrem Blattwinkel verstellbar sind,
- jedes Rotorblatt (108) individuell ansteuerbar ist, und
- die Windenergieanlage (100) eine Steuereinrichtung (502) aufweist, und zum Durchführen einer Einzelblattverstellung vorbereitet ist, und wobei
- die Windenergieanlage, insbesondere die Steuereinrichtung (502), dazu eingerichtet ist, ein Verfahren nach einem der Ansprüche 1 bis 10 durchzuführen.

12. Windenergieanlage nach Anspruch 11, **dadurch gekennzeichnet, dass**

- die Windenergieanlage (100) eine Erfassungseinrichtung (554) aufweist, zum Erfassen einer Belastung der Windenergieanlage, insbesondere
- zum Erfassen einer Nickmomentkomponente und einer Giermomentkomponente für jedes Rotorblatt (108), und wobei die Windenergieanlage (100), insbesondere die Steuereinrichtung (502) dazu vorbereitet ist, aus der erfassten Nickmomentkomponente und der erfassten Giermomentkomponente einen für das betreffende Rotorblatt (108) individuellen Offsetwinkel zu bestimmen, und daraus für das betreffende Rotorblatt eine individuelle Vorsteuerverstellrate zu bestimmen.

**Claims**

1. A method for controlling a wind power installation (100), wherein

    - the wind power installation has a rotor (106) with a plurality of rotor blades (108),
    - the rotor blades (108) are adjustable in their blade angle,
    - each rotor blade (108) is activatable individually,
    - for the individual activation, in each case a total adjustment rate $R_{of}$ which indicates an intended speed of change of the respective blade angle is predetermined,
    - a collective blade angle identical for all of the rotor blades (108) is provided,
    - a collective adjustment rate (Rc) identical for all of the rotor blades describes an intended speed of change of the collective blade angle,
    - an individual offset angle ($\alpha_{of}$) which indicates a value by which the blade angle is intended to deviate from the collective blade angle ($\alpha_c$) is predetermined for each rotor blade,
    - an individual feed forward control adjustment rate which indicates an adjustment rate which is provided for reaching the offset angle is determined for each rotor blade (108) from the individual offset angle,
    - an individual offset deviation is determined for each rotor blade depending on a comparison of the individual offset angle ($\alpha_{of}$) and a detected blade angle of the rotor blade, and
    - the total adjustment rate of each rotor blade is determined depending on

        - the collective blade angle and/or the collective adjustment rate,
        - the individual feed forward control adjustment rate, and
        - the individual offset deviation.

2. The method as claimed in claim 1, **characterized in that**

    - the individual feed forward control adjustment rate is determined from the individual offset angle by means of a feed forward control (414), and
    - a feedback controller adjustment rate is determined from the individual offset deviation by means of an offset feedback controller (416) in order to adjust the individual offset deviation, wherein
    - the total adjustment rate is determined from the collective adjustment rate, the feed forward control adjustment rate and the feedback controller adjustment rate, in particular from the sum thereof.

3. The method as claimed in claim 1 or 2, **characterized in that** the feed forward control adjustment rate is determined independently of the detected blade angle, in particular independently of the individual offset deviation.

4. The method as claimed in one of the preceding claims, **characterized in that** the individual offset angle is predetermined as a temporal offset profile, in particular by an offset function which is time-dependent and/or dependent on a position or rotation of the rotor.

5. The method as claimed in one of the preceding claims, **characterized in that** each individual offset angle is predetermined as a temporal offset profile having

    - a pitching component for reducing a pitching moment, and
    - a yaw component for reducing a yaw moment,
    in particular **in that**
    - the pitching component and the yaw component are combined in the temporal profile of the individual offset angle.

6. The method as claimed in one of the preceding claims, **characterized in that** each individual offset angle is predetermined as a temporal offset profile by a time-dependent offset function, in particular cyclic offset function, in order

- to reduce a pitching moment and a yaw moment, wherein
- the temporal profile is **characterized by** an amplitude parameter (A) and a phase parameter ($\phi$) and
- the amplitude parameter (A) and the phase parameter ($\phi$) take into consideration a reduction in the pitching moment and the yaw moment, in particular in that
- the amplitude parameter and the phase parameter each take into consideration a pitching component and a yaw component.

7. The method as claimed in one of the preceding claims, **characterized in that**

- at least one amplitude limit value is predetermined for a or the offset profile,
- it is checked for each rotor blade whether the offset profile reaches the amplitude limit value, and
- if it is reached, connection of the individual feed forward control adjustment rate to the collective adjustment rate is interrupted, in particular such that a or the feedback controller adjustment rate continues to be connected to the collective adjustment rate.

8. The method as claimed in one of the preceding claims, **characterized in that** a or the offset profile is predetermined via the following offset function f(t):

$$f(t) = A*\sin(\omega*t+\phi)$$

wherein

A denotes a predeterminable amplitude,
$\omega$ describes a rotational speed of the rotor, and
$\phi$ describes a predeterminable angular displacement relative to a reference angle.

9. The method as claimed in one of the preceding claims, **characterized in that**

the feed forward control adjustment rate is predetermined as a feed forward control profile via the following feed forward control function v(t):

$$v(t) = A*\cos(\omega*t+\phi)*(\omega+d\phi/dt) + dA/dt*\sin(\omega*t+\phi)$$

wherein

A denotes a or the predeterminable amplitude,
$\omega$ describes a or the rotational speed of the rotor, and
$\phi$ describes a or the predeterminable angular displacement relative to a reference angle.

10. The method as claimed in one of the preceding claims, **characterized in that**

- a or the amplitude A and a or the angular displacement $\phi$ of a or the offset function f(t) = A*$\sin(\omega*t+\phi)$ are determined depending on detection of a loading, and in particular
- the amplitude A and/or the angular displacement $\phi$ form filtered variables, in particular such that
- depending on the detection of a load, a preliminary amplitude $A_v$ and/or a preliminary angular displacement $\phi_v$ are ascertained, and
- the amplitude A and/or the angular displacement $\phi$ are each determined from the preliminary amplitude $A_v$ and/or the preliminary angular displacement $\phi_v$ by filtering of the preliminary amplitude $A_v$ and/or the preliminary angular displacement $\phi_v$, and/or in each case by predetermining a ramp as the maximum speed of change for the preliminary amplitude $A_v$ and/or for the preliminary angular displacement $\phi_v$,

or
depending on detection of a load, the amplitude A and the angular displacement $\phi$ are predetermined as constant values and therefore a simplified feed forward control function vs(t) is predetermined from a derivation of the offset function f(t) = A*sin(ω*t+φ) as:

$$vs(t) = A*cos(ω*t+φ)*ω.$$

11. A wind power installation (100), wherein

- the wind power installation (100) has a rotor (106) with a plurality of rotor blades (108),
- the rotor blades (108) are adjustable in their blade angle,
- each rotor blade (108) is activatable individually, and
- the wind power installation (100) has a control device (502) and is set up for carrying out an individual blade adjustment, and wherein
- the wind power installation, in particular the control device (502), is designed to carry out a method as claimed in one of claims 1 to 10.

12. The wind power installation as claimed in claim 11, **characterized in that**

- the wind power installation (100) has a detection device (554) for detecting a loading of the wind power installation, in particular
- for detecting a pitching moment component and a yaw moment component for each rotor blade (108), and wherein the wind power installation (100), in particular the control device (502) is set up so as to determine, from the detected pitching moment component and the detected yaw moment component, an offset angle individual to the rotor blade (108) concerned, and to determine an individual feed forward control adjustment rate therefrom for the rotor blade concerned.

**Revendications**

1. Procédé destiné à commander une éolienne (100), dans lequel

- l'éolienne présente un rotor (106) avec plusieurs pales de rotor (108),
- l'angle de pale des pales de rotor (108) peut être ajusté,
- chaque pale de rotor (108) peut être pilotée de manière individuelle,
- un taux d'ajustement global $R_{of}$ est respectivement spécifié pour le pilotage individuel, lequel indique une vitesse de modification prévue de l'angle de pale respectif,
- un angle de pale collectif identique à toutes les pales de rotor (108) est prévu,
- un taux d'ajustement collectif (Rc) identique à toutes les pales de rotor décrit une vitesse de modification prévue de l'angle de pale collectif,
- un angle de décalage individuel ($α_{of}$) est spécifié pour chaque pale de rotor, lequel indique une valeur de laquelle l'angle de pale doit différer de l'angle de pale collectif ($α_c$),
- un taux d'ajustement de commande pilote individuel, qui indique un taux d'ajustement qui est prévu pour atteindre l'angle de décalage, est défini à partir de l'angle de décalage individuel pour chaque pale de rotor (108),
- un écart de décalage individuel est défini pour chaque pale de rotor en fonction d'une comparaison de l'angle de décalage individuel ($α_{of}$) et d'un angle de pale détecté de la pale de rotor, et
- le taux d'ajustement global de chaque pale de rotor est défini en fonction

- - de l'angle de pale collectif et/ou du taux d'ajustement collectif,
- - du taux d'ajustement de commande pilote individuel, et
- - de l'écart de décalage individuel.

2. Procédé selon la revendication 1, **caractérisé en ce que**

- le taux d'ajustement de commande pilote individuel est défini à partir de l'angle de décalage individuel au moyen d'une commande pilote (414), et
- un taux d'ajustement de régulateur est défini à partir de l'écart de décalage individuel au moyen d'un régulateur de décalage (416) pour régler l'écart de décalage individuel, dans lequel
- le taux d'ajustement global est défini à partir du taux d'ajustement collectif, du taux d'ajustement de commande pilote et du taux d'ajustement de régulateur, en particulier à partir de leur somme.

3. Procédé selon la revendication 1 ou 2, **caractérisé en ce que**
le taux d'ajustement de commande pilote est défini indépendamment de l'angle de pale détecté, en particulier indépendamment de l'écart de décalage individuel.

4. Procédé selon l'une quelconque des revendications précédentes, **caractérisé en ce que** l'angle de décalage individuel est spécifié en tant que courbe dans le temps du décalage, en particulier par une fonction du décalage dépendant du temps et/ou dépendant d'une position ou d'une rotation du rotor.

5. Procédé selon l'une quelconque des revendications précédentes, **caractérisé en ce que**

chaque angle de décalage individuel est spécifié en tant que courbe dans le temps du décalage avec

- une composante de tangage destinée à réduire un couple de tangage et
- une composante de lacet destinée à réduire un couple de lacet,

en particulier que

- la composante de tangage et la composante de lacet se superposent dans la courbe dans le temps de l'angle de décalage individuel.

6. Procédé selon l'une quelconque des revendications précédentes, **caractérisé en ce que**
chaque angle de décalage individuel est spécifié en tant que courbe dans le temps du décalage par une fonction du décalage dépendant du temps, en particulier une fonction de décalage cyclique, pour

- réduire un couple de tangage et un couple de lacet, dans lequel
- la courbe dans le temps se **caractérise par** un paramètre d'amplitude (A) et un paramètre de phase (φ) et
- le paramètre d'amplitude (A) et le paramètre de phase (φ) tiennent compte d'une réduction du couple de tangage et du couple de lacet, en particulier que
- le paramètre d'amplitude et le paramètre de phase tiennent compte respectivement d'une composante de tangage et d'une composante de lacet.

7. Procédé selon l'une quelconque des revendications précédentes, **caractérisé en ce que**

- pour une ou la courbe du décalage, au moins une valeur limite d'amplitude est spécifiée,
- il est vérifié pour chaque pale de rotor si la courbe du décalage atteint la valeur limite d'amplitude, et
- lorsqu'elle est atteinte, un enclenchement du taux d'ajustement de commande pilote individuel sur le taux d'ajustement collectif est interrompu, en particulier de telle sorte qu'un ou le taux d'ajustement de régulateur est enclenché par ailleurs sur le taux d'ajustement collectif.

8. Procédé selon l'une quelconque des revendications précédentes, **caractérisé en ce que**

une ou la courbe du décalage est spécifiée par l'intermédiaire de la fonction du décalage f(t) suivante :

$$f(t)= A*\sin(\omega*t+\phi)$$

dans lequel
A désigne une amplitude pouvant être spécifiée,
CJ décrit une vitesse de rotation du rotor, et
φ décrit un déplacement angulaire pouvant être spécifié par rapport à un angle de référence.

9. Procédé selon l'une quelconque des revendications précédentes, **caractérisé en ce que**

le taux d'ajustement de commande pilote est spécifié en tant que courbe de la commande pilote par l'intermédiaire de la fonction de commande pilote v(t) suivante :

$$v(t)=A*\cos(\omega*t+\phi)*(\omega+d\phi/dt) + dA/dt*\sin(\omega*t+\phi)$$

dans lequel

A désigne une amplitude ou l'amplitude pouvant être spécifiée,

CJ décrit une ou la vitesse de rotation du rotor, et

$\phi$ décrit un ou le déplacement angulaire pouvant être spécifié par rapport à un angle de référence.

10. Procédé selon l'une quelconque des revendications précédentes, **caractérisé en ce que**

- une amplitude ou l'amplitude A et un ou le déplacement angulaire $\phi$ d'une ou de la fonction de décalage f(t)= A*sin($\omega$*t+$\phi$) sont définis en fonction d'une détection de contrainte, et en particulier
- l'amplitude A et/ou le déplacement angulaire $\phi$ forment des grandeurs filtrées, en particulier de telle sorte que
- en fonction de la détection de contrainte, une préamplitude $A_v$ et/ou un prédéplacement angulaire $\phi_v$ sont déterminés, et
- l'amplitude A et/ou le déplacement angulaire $\phi$ sont définis respectivement à partir de la préamplitude $A_v$, et/ou du prédéplacement angulaire $\phi_v$ en filtrant la préamplitude $A_v$ et/ou le prédéplacement angulaire $\phi_v$ et/ou respectivement en spécifiant une rampe en tant que vitesse de modification maximale pour la préamplitude $A_v$ et/ou pour le prédéplacement angulaire $\phi_v$

ou

l'amplitude A et le déplacement angulaire $\phi$ sont spécifiés en tant que valeurs constantes en fonction d'une détection de charge et ainsi une fonction de commande pilote simplifiée vs(t) est spécifiée à partir d'une déduction de la fonction de décalage f(t)= A*sin($\omega$*t+$\phi$) en tant que :

$$vs(t)=A*cos(\omega*t+\phi)*\omega.$$

11. Eolienne (100), dans laquelle

- l'éolienne (100) présente un rotor (106) avec plusieurs pales de rotor (108),
- l'angle de pale des pales de rotor (108) peut être ajusté,
- chaque pale de rotor (108) peut être pilotée individuellement, et
- l'éolienne (100) présente un système de commande (502) et est préparée pour mettre en oeuvre un ajustement de pale individuel, et dans laquelle
- l'éolienne, en particulier le système de commande (502), est mise au point pour mettre en oeuvre un procédé selon l'une quelconque des revendications 1 à 10.

12. Eolienne selon la revendication 11, **caractérisée en ce que**

- l'éolienne (100) présente un système de détection (554) pour détecter une contrainte de l'éolienne, en particulier
- pour détecter une composante de couple de tangage et une composante de couple de lacet pour chaque pale de rotor (108), et dans laquelle l'éolienne (100), en particulier le système de commande (502), est préparée pour définir, à partir de la composante de couple de tangage détectée et de la composante de couple de lacet détectée, un angle de décalage individuel pour la pale de rotor (108) concernée et pour définir, sur cette base, un taux d'ajustement de commande pilote individuel pour la pale de rotor concernée.

Fig.1

202

Con

$\alpha_c$

200

212

IPC

$\alpha_{of}$

208

210

204

206

$\alpha_s$

BC

$-$

$\alpha_i$

Fig. 2

302

Con

$R_c$

300

312

306

IPC

308

310

304

$R_s$

PRC

$-$

314

$\alpha_{of}$

$R_{of}$

$R_i$

R

316

$-$

$\alpha^l_i$

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- US 2011229300 A1